(19) Europäisches Patentamt / European Patent Office / Office européen des brevets

(11) **EP 1 815 179 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(21) Anmeldenummer: **05799935.1**

(22) Anmeldetag: **03.11.2005**

(51) Int Cl.:
*F16P 3/14* (2006.01)          *B30B 15/28* (2006.01)

(86) Internationale Anmeldenummer:
**PCT/EP2005/011768**

(87) Internationale Veröffentlichungsnummer:
**WO 2006/056300 (01.06.2006 Gazette 2006/22)**

(54) **SICHERHEITSEINRICHTUNG FÜR EINE AUTOMATISIERT ARBEITENDE ANLAGE MIT ZUMINDEST EINEM AUTOMATISIERT BEWEGBAREN ANLAGENTEIL**

SECURITY DEVICE FOR AUTOMATED INSTALLATION COMPRISING AT LEAST ONE AUTOMATED MOBILE PART

DISPOSITIF DE SECURITE POUR INSTALLATION AUTOMATISEE COMPRENANT AU MOINS UNE PARTIE A MOUVEMENT AUTOMATISE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.11.2004 DE 102004058471**

(43) Veröffentlichungstag der Anmeldung:
**08.08.2007 Patentblatt 2007/32**

(73) Patentinhaber: **Pilz GmbH & Co. KG**
**73760 Ostfildern (DE)**

(72) Erfinder:
• **WEISHAAR, Christoph**
**71336 Waiblingen-Bitterfeld (DE)**
• **BETZ, Gerhard**
**73061 Ebersbach-Bünzwangen (DE)**

(74) Vertreter: **Duhme, Torsten et al**
**Witte, Weller & Partner**
**Patentanwälte**
**Postfach 10 54 62**
**70047 Stuttgart (DE)**

(56) Entgegenhaltungen:
EP-A- 1 186 975          DE-A1- 10 027 156
DE-T2- 69 433 308        DE-U1- 8 611 018

**Beschreibung**

Die vorliegende Erfindung betrifft eine automatisiert arbeitende Anlage, insbesondere eine Fertigungs- und/oder Förderanlage, mit zumindest einem automatisiert bewegten Anlagenteil, mit einer Steuereinheit, die dazu ausgebildet ist, die Bewegungen des Anlagenteils zu steuern, und mit einer Sicherheitseinrichtung, die dazu ausgebildet ist, zumindest eine Bewegungsgröße des Anlagenteils sicherheitsrelevant zu bestimmen.

Die Erfindung betrifft ferner ein Verfahren zum sicherheitsrelevanten Stillsetzen eines bewegten Anlagenteils einer solchen Anlage.

Eine Anlage mit einer solchen Sicherheitseinrichtung ist beispielsweise aus DE 100 27 156 A1 bekannt.

Die bekannte Anlage ist eine Abkantpresse oder eine vergleichbare Maschine, bei der ein erstes Maschinenteil eine stempelartige Arbeitsbewegung gegen ein zweites Maschinenteil ausführt. Mit dieser Arbeitsbewegung lässt sich ein Werkstück unter Druck spanlos umformen oder auch schneiden oder stanzen.

Wie leicht einzusehen ist, ist eine solche stempelartige Arbeitsbewegung für das Bedienpersonal, welches das Werkstück beispielsweise einlegen und ausrichten muss, sehr gefährlich. Tatsächlich gibt es immer wieder Unfälle, bei denen einer Bedienperson durch Unachtsamkeit und/oder Fehlbedienungen schwere Quetschungen zugefügt oder sogar Körperteile abgetrennt werden. Zur Vermeidung derartiger Unfälle besitzt die Anlage aus DE 100 27 156 A1 eine mitlaufende, berührungslos wirkende Schutzeinrichtung (mitlaufende "BWS"). Konkret handelt es sich dabei um eine Lichtschrankenanordnung, deren Lichtstrahlen parallel zur Vorderkante des bewegten Werkzeugs verlaufen, wobei die Lichtschrankenanordnung mit der Arbeitsbewegung des Werkzeugs mitgeführt wird. Wird einer der Lichtstrahlen der Lichtschrankenanordnung unterbrochen, wird die Arbeitsbewegung in aller Regel sofort gestoppt. Kurz vor dem Schließen der Presse muss die Lichtschrankenanordnung allerdings deaktiviert werden (sogenanntes Muting), da die Unterbrechung der Lichtstrahlen durch das umzuformende Werkstück ansonsten ein Schließen der Presse verhindern würde.

Um bei älteren Pressen eine einfache Nachrüstung mit einer solchen Lichtschrankenanordnung zu ermöglichen, schlägt die DE 100 27 156 A1 vor, die Lichtschrankenanordnung dann zu deaktivieren ("muten"), wenn die Bewegungsgeschwindigkeit des stempelartigen Werkzeugs unterhalb einer vorgebbaren Grenzgeschwindigkeit liegt. Üblicherweise wird das stempelartige Werkzeug bei einer Presse nämlich aus seiner Ruheposition (sogenannter oberer Totpunkt) zunächst mit einer hohen Geschwindigkeit an das Werkstück herangefahren (Eilgang). Die Umformung des Werkstücks erfolgt hingegen mit einer geringen Geschwindigkeit (Schleichgang). Laut DE 100 27 156 A1 besitzt die Deaktivierung der Lichtschrankenanordnung allein in Abhängigkeit von der Bewegungsgeschwindigkeit des Werkzeugs den Vorteil, dass auch ältere Pressen relativ einfach mit der beschriebenen Lichtschrankenanordnung nachgerüstet werden können. Andererseits setzt die vorgeschlagene Vorgehensweise voraus, dass die jeweilige Geschwindigkeit des Werkzeugs sicherheitsrelevant bestimmt werden kann, das heißt die Bewegungsgeschwindigkeit des Werkzeugs muss so bestimmt werden, dass selbst bei einem Fehler oder Funktionsausfall in der Sicherheitseinrichtung kein gefährlicher Zustand für das Bedienpersonal auftreten kann.

Bei der Presse aus DE 100 27 156 A1 wird die Geschwindigkeit des Werkzeugs daher mit zwei Messmodulen bestimmt, wobei ein Messmodul als Winkelschrittgeber ausgebildet ist, bei dem ein an dem Werkzeug fixiertes Seil durch die Arbeitsbewegung auf- und abgewickelt wird. Die durch das Auf- und Abwickeln erzeugte Drehbewegung-wird mit einem Winkelschrittsensor oder Drehsensor erfasst. Das zweite Messmodul besitzt einen Induktivsensor, durch den ein Magnetmaßband bewegt wird, wobei das Magnetmaßband ebenfalls der Bewegung des Werkzeugs folgt. Als Alternativen werden noch Messeinrichtungen genannt, die eine Zahnstange, ein Linearpotentiometer, einen lichtdurchlässigen Maßstab mit Lichtschranke oder einen Induktivsensor mit einem Lochbandblech beinhalten.

All diesen Sensoren ist gemeinsam, dass ihre physikalischen Abmessungen von der Größe der Anlage bzw. dem Bewegungshub des bewegten Anlagenteils abhängen. Soll beispielsweise eine Bewegungswegstrecke von 1.000 mm überwacht werden, wird ein entsprechend langes Seil, Maßband oder Maßstab benötigt. Die vorgeschlagenen Messmittel sind daher alle relativ großbauend und erfordern eine aufwendige Montage mit entsprechend hohen Kosten. Dies gilt bei der sicherheitsrelevanten Bestimmung von Bewegungsgrößen eines bewegten Anlagenteils um so mehr, da aus Sicherheitsgründen in aller Regel redundante Messmittel eingesetzt werden müssen.

Eine vergleichbare Anlage, bei der es sich ebenfalls um eine Presse handelt, ist aus WO 97/25568 bekannt. In diesem Fall kommt eine optische Encoderscheibe zum Einsatz, um die Arbeitsbewegung des Werkzeugs zu überwachen. Die Encoderscheibe wird wiederum über eine Kette, ein Seil oder dergleichen gedreht, welches mit einem Ende an dem bewegten Werkzeug befestigt ist (vgl. dort Figur 9b). Im Hinblick auf die Materialkosten, die Abmessungen und den Montageaufwand sind die Nachteile dieselben wie bei der Anlage aus DE 100 27 156 A1.

Die vorliegende Erfindung betrifft bevorzugt die sicherheitsrelevante Bestimmung einer Bewegungsgröße an einer Presse oder einer vergleichbaren stationären Anlage mit einem stempelartig bewegten Werkzeug. Die Erfindung ist hierauf jedoch nicht beschränkt und kann gleichermaßen bei anderen, vorzugsweise stationären Anlagen eingesetzt werden, bei denen eine Bewegungsgeschwindigkeit und/oder Bewegungswegstrecke eines bewegten Anlagenteils sicherheitsrelevant bestimmt werden müssen. Insbesondere kann die Erfindung daher bei anderen Fertigungsanlagen wie etwa Werkzeugmaschinen zum Drehen, Bohren und/oder Fräsen, Robotern, Schweißanlagen u.a. oder auch bei stationären Transport- oder Förderanlagen, wie etwa Transportbändern oder Aufzügen, eingesetzt werden.

Es ist eine Aufgabe der vorliegenden Erfindung, eine kostengünstige und möglichst kleinbauende Alternative anzugeben, um die Bewegungsgeschwindigkeit und/oder Bewegungswegstrecke eines bewegten Anlagenteils einer an sich stationären Anlage sicherheitsrelevant zu bestimmen.

Diese Aufgabe wird gemäß einem Aspekt der vorliegenden Erfindung dadurch gelöst, dass die eingangs genannte Sicherheitseinrichtung zumindest einen Beschleunigungssensor und eine Auswerteeinheit beinhaltet, wobei der Beschleunigungssensor mit dem bewegten Anlagenteil gekoppelt ist, um eine Beschleunigung des bewegten Anlagenteils zu erfassen, und wobei die Auswerteeinheit dazu ausgebildet ist, zumindest eine Bewegungsgeschwindigkeit und/oder Bewegungswegstrecke des Anlagenteils anhand der Beschleunigung zu bestimmen.

Die Aufgabe wird ferner durch ein Verfahren der eingangs genannten Art gelöst, bei dem zum Bestimmen der Bewegungsgröße zunächst eine Beschleunigung des bewegten Anlagenteils mit Hilfe eines Beschleunigungssensors erfasst wird, und bei dem anschließend anhand der erfassten Beschleunigung zumindest eine Bewegungsgeschwindigkeit und/oder Bewegungswegstrecke des Anlagenteils als Bewegungsgröße bestimmt wird.

Die vorliegende Erfindung löst sich damit von dem bislang - zumindest für die sicherheitsrelevante Bestimmung von Weg und/oder Geschwindigkeit an stationären Anlagen stets verwendeten - Prinzip, Messmittel einzusetzen, deren Messbereich und deren physikalische Abmessungen von der Größe der Anlage und der zu erfassenden Messgröße abhängen. Ein Beschleunigungssensor ermöglicht nämlich die messtechnische Erfassung einer Beschleunigung unabhängig von der Größe des beschleunigten Anlagenteils und unabhängig von der Wegstrecke, die während der Beschleunigung durchfahren wird. Die physikalischen Abmessungen eines Beschleunigungssensors sind damit unabhängig von der Anlagengröße und unabhängig von der Wegstrecke, die das bewegte Anlagenteil zurücklegt.

Darüber hinaus sind Beschleunigungssensoren, beispielsweise kapazitiv oder piezoresistiv arbeitende Beschleunigungssensoren, als integrierte Bauelemente kommerziell erhältlich, wobei deren Abmessungen nur einige Millimeter oder Zentimeter betragen. Geeignete Beschleunigungssensoren werden beispielsweise bei Kraftfahrzeugen eingesetzt, um anhand der erfassten Beschleunigungen, die beispielsweise bei einem Unfall auftreten, einen Airbag auszulösen. In diesen Fällen dient die erfasste Beschleunigung allerdings selbst als Messgröße, wohingegen die vorliegende Erfindung eine Bewegungsgeschwindigkeit und/oder Bewegungswegstrecken anhand der erfassten Beschleunigung bestimmt.

Der physikalische Zusammenhang zwischen Beschleunigung, Geschwindigkeit und zurückgelegter Wegstrecke ist hinlänglich bekannt. So lässt sich die Geschwindigkeit eines bewegten Anlagenteils aus der messtechnisch erfassten Beschleunigung berechnen, indem man die erfassten Beschleunigungswerte über der Zeit integriert. Gleichermaßen kann die zurückgelegte Wegstrecke durch Integration über die Geschwindigkeit bestimmt werden. Um die tatsächlichen Werte der Geschwindigkeit oder Wegstrecke zu erhalten, müssen allerdings die Geschwindigkeit und die Position des bewegten Anlagenteils zu Beginn der Integrationszeit bekannt sein. Dies ist bei einer automatisiert arbeitenden, stationären Anlage jedoch kein Problem, da in aller Regel zumindest nach dem Einschalten der Anlage ein definierter Ruhezustand vorliegt oder in einem Initialisierungsprozess eingenommen wird. Bei einer Presse ist ein definierter Ruhepunkt (Geschwindigkeit Null, definierte Position) stets zu Beginn eines Arbeitszyklus gegeben, da jeder Arbeitszyklus auf dem sogenannten oberen Totpunkt des Pressenwerkzeugs beginnt.

Wird nun die Beschleunigung des Werkzeugs (oder eines mit ihm verbundenen Anlagenteils) vom Beginn der Arbeitsbewegung an kontinuierlich oder zumindest in regelmäßigen Zeitabständen erfasst, kann die aktuelle Geschwindigkeit und die aktuelle Position mathematisch bestimmt werden.

Der Wert der Geschwindigkeit und der zurückgelegten Wegstrecke hängen bei der erfindungsgemäßen Lösung allerdings nicht nur von dem bekannten Startpunkt ab, sondern auch von der Genauigkeit, mit der der Beschleunigungssensor die Beschleunigung des bewegten Anlagenteils erfasst, sowie von der Integrationsgenauigkeit der Auswerteeinheit. Für eine sicherheitsrelevante Bestimmung von Geschwindigkeit, Wegstrecke oder Position ist ein exakter Messwert jedoch nicht erforderlich. Vielmehr genügt hier eine Grenzwertbetrachtung, die eine sicherheitstechnisch zuverlässige Aussage darüber erlaubt, dass die Geschwindigkeit, Wegstrecke oder Position einen unter sicherheitstechnischen Gesichtspunkten festgelegten Grenzwert nicht übersteigt oder unterschreitet. Indem man eine geeignete Sicherheitsreserve einplant, können etwaige Messungenauigkeiten des neuen Ansatzes leicht kompensiert werden.

Die erfindungsgemäße Lösung ermöglicht es, kleine und kostengünstige Beschleunigungssensoren zum Bestimmen von Geschwindigkeit, Weg und/oder Position des bewegten Anlagenteils einzusetzen, selbst wenn die damit erreichbaren "Messtoleranzen" für andere steuerungstechnische Anwendungen unzureichend sind.

Die neue Sicherheitseinrichtung besitzt über die geringen Bauteilkosten und die geringen Abmessungen hinaus den Vorteil, dass der Montageaufwand gegenüber bisherigen Einrichtungen erheblich reduziert ist. Der Beschleunigungssensor benötigt keinen Bezugspunkt am feststehenden Teil der Anlage, im Gegensatz zu allen bisherigen Messmitteln. Daher lässt er sich weitgehend beliebig an dem beweglichen Anlagenteil positionieren. Bei einer Presse der eingangs beschriebenen Art ist es insbesondere vorteilhaft, den zumindest einen Beschleunigungssensor im oder am Empfänger der Lichtschrankenanordnung zu integrieren, wodurch der Verdrahtungsaufwand erheblich reduziert ist.

Darüber hinaus besitzt die neue Sicherheitseinrichtung den Vorteil, dass sie weitgehend unabhängig vom jeweiligen Anlagentyp ist und damit für eine Vielzahl unterschiedlicher Anlagen eingesetzt werden kann.

Ein weiterer Vorteil liegt schließlich darin, dass die neue Sicherheitseinrichtung eine berührungslose und damit verschleißfreie Bestimmung von Bewegungsgeschwindigkeit, Wegstrecke und/oder Position ermöglicht.

Insgesamt bietet die vorliegende Erfindung damit eine kostengünstige und sehr kleinbauende Alternative, um Bewegungsgeschwindigkeiten und/oder Bewegungswegstrecken (und damit Positionen) eines bewegten Anlagenteils einer stationären Anlage sicherheitsrelevant zu bestimmen. Die oben genannte Aufgabe ist daher vollständig gelöst.

In einer Ausgestaltung der Erfindung weist die Sicherheitseinrichtung zumindest zwei Beschleunigungssensoren auf und die Auswerteeinheit ist dazu ausgebildet, die Bewegungsgeschwindigkeit und/oder Bewegungswegstrecke des Anlagenteils mit Hilfe der zumindest zwei Beschleunigungssensoren redundant zu bestimmen.

Diese Ausgestaltung ist eine besonders einfache Möglichkeit, um durch einen Plausibilitätsvergleich eine erhöhte Fehlersicherheit zu erreichen. Aufgrund der geringen Baugröße von kommerziell erhältlichen Beschleunigungssensoren profitiert diese vorteilhafte Ausgestaltung jedoch ohne Einschränkungen von den zuvor genannten Vorteilen.

In einer weiteren Ausgestaltung sind die zumindest zwei Beschleunigungssensoren so ausgebildet, dass sie Beschleunigungen des bewegten Anlagenteils in jeweils einer von zumindest zwei unterschiedlichen Sensorachsen erfassen.

Durch diese Ausgestaltung wird die Wahrscheinlichkeit für das Auftreten sogenannter Common-Cause-Fehler reduziert. Die Sicherheit der neuen Sicherheitseinrichtung ist daher weiter erhöht. Andererseits lässt eine vektorielle Zerlegung der Messwerte entlang der zumindest zwei unterschiedlichen Sensorachsen weiterhin einen vorteilhaften Plausibilitätsvergleich zu.

In einer weiteren Ausgestaltung sind die zumindest zwei Beschleunigungssensoren in einem gemeinsamen Sensorgehäuse integriert.

Diese Ausgestaltung ermöglicht eine weitere Reduzierung des benötigten Bauraums und eine weitere Reduzierung von Bauteil-und/oder Montagekosten. Darüber hinaus ist es besonders vorteilhaft, wenn die zumindest zwei integrierten Beschleunigungssensoren unterschiedliche Sensorachsen erfassen. Geeignete Beschleunigungssensoren sind nämlich in zahlreichen Variationen kommerziell erhältlich, wobei der eigentliche Anwendungszweck die mehrdimensionale Erfassung von Beschleunigungen innerhalb einer Ebene oder im Raum ist. Im Rahmen der vorliegenden Ausgestaltung dienen die zumindest zwei Sensorachsen jedoch zur redundanten Erfassung von Beschleunigungen des bewegten Anlagenteils in einer Bewegungsrichtung. Dies kann in der besonders bevorzugten Ausgestaltung auf sehr kostengünstige Weise realisiert werden.

In einer weiteren Ausgestaltung sind die zumindest zwei Beschleunigungssensoren in zumindest zwei unterschiedlichen Einbaulagen mit dem beweglichen Anlagenteil gekoppelt, so dass an den zumindest zwei Beschleunigungssensoren unterschiedliche gravitative Vorspannungen auftreten.

Besonders bevorzugt ist es dabei, wenn die zumindest zwei Beschleunigungssensoren hinsichtlich ihrer Einbaulagen um 180° versetzt zueinander angeordnet sind, da sie dann gegenläufige Ausgangssignale erzeugen, die eine vorteilhafte Auswertung ermöglichen.

Da Beschleunigungssensoren typischerweise eine bewegte Masse beinhalten, deren Auslenkung aufgrund von Trägheitskräften messtechnisch erfasst werden, machen sich auch unterschiedliche Einbaulagen messtechnisch bemerkbar. Ursache hierfür ist die Auslenkung der bewegten Masse aufgrund der Erdanziehungskraft. Diese äußert sich im Ausgangssignal der Beschleunigungssensoren in einem stationären Vorspannungswert, also einer gravitativen Vorspannung. Die unterschiedlichen gravitativen Vorspannungen können für eine Plausibilitätsprüfung gut genutzt werden, wodurch sich die Funktionssicherheit der neuen Sicherheitseinrichtung weiter erhöhen lässt. Durch die besonders bevorzugte Differenzbildung lassen sich zudem Rauschspannungsanteile einfach eliminieren. Die sicherheitsrelevante Bestimmung von Geschwindigkeit und/oder Weg bzw. Position ist damit noch genauer und zuverlässiger möglich.

In einer weiteren Ausgestaltung ist die Auswerteeinheit dazu ausgebildet, die zumindest zwei Beschleunigungssensoren zeitversetzt zueinander auszulesen.

Durch diese Ausgestaltung lässt sich auf sehr kostengünstige Weise eine höhere Messauflösung und damit eine schnellere Reaktion der neuen Sicherheitseinrichtung erreichen.

In einer weiteren Ausgestaltung besitzt der zumindest eine Beschleunigungssensor einen Testeingang zum Einspeisen eines Testsignals. Bevorzugt ist das Testsignal mit der Auswerteeinheit verbunden, die so in der Lage ist, ein Testsignal in den Beschleunigungssensor einzuspeisen.

Anhand einer an das Testsignal geknüpften Erwartungshaltung kann die fehlerfreie Funktion des Beschleunigungssensors im laufenden Betrieb der Sicherheitseinrichtung sehr einfach überwacht werden. Beispielsweise kann mit Hilfe des Testsignals eine definierte Auslenkung der bewegten Masse in dem Beschleunigungssensor bewirkt werden, die sich im Ausgangssignal des Beschleunigungssensors entsprechend widerspiegeln muss. Die Ausgestaltung ermöglicht somit einen sicheren Betrieb, selbst wenn nur ein einzelner Beschleunigungssensor zur Bestimmung von Geschwindigkeit und/oder Wegstrecke verwendet wird. Die Bauteilkosten lassen sich damit weiter reduzieren.

In einer weiteren Ausgestaltung ist die Auswerteeinheit ferner dazu ausgebildet, eine Bewegungsrichtung des bewegten Anlagenteils anhand der Beschleunigung sicherheitsrelevant zu bestimmen.

Die Bewegungsrichtung des bewegten Anlagenteils kann aus dem Ruhezustand heraus sehr einfach anhand des "Vorzeichens" der messtechnisch erfassten Beschleunigungswerte abgeleitet werden. Darüber hinaus kann die Bewegungsrichtung auch während des Bewegungsablaufs aus den erhaltenen Geschwindigkeitsoder Positionswerten bestimmt werden. Die vorliegende Ausgestaltung bietet daher ohne nennenswerte Zusatzkosten eine Information, die in die sicherheitskritische Beurteilung einer Betriebssituation vorteilhaft einfließen kann. Beispielsweise können bei einer Anlage häufig unterschiedliche Bewegungsgeschwindigkeiten abhängig von der jeweiligen Bewegungsrichtung zugelassen werden, wodurch sich die Produktivität der Anlage ohne Einbußen in Bezug auf die Sicherheit erhöhen lässt.

In einer weiteren Ausgestaltung ist ein Detektor vorgesehen, der dazu ausgebildet ist, das Erreichen einer definierten Ruheposition des bewegten Anlagenteils zu erfassen, wobei der Detektor mit der Auswerteeinheit verbunden ist. Bevorzugt ist der Detektor dabei fehlersicher im Sinne der einschlägigen Bestimmungen (beispielsweise im Sinne der Kategorie 4 der europäischen Norm EN 954-1 oder vergleichbare Sicherheitsvorschriften) ausgebildet.

Mit Hilfe eines solchen Detektors kann der Startpunkt der Bewegung des bewegten Anlagenteils sehr zuverlässig bestimmt werden. Damit lässt sich die Genauigkeit und Zuverlässigkeit der bestimmten Werte für die Geschwindigkeit, Wegstrecke und/oder die Position erhöhen. Infolgedessen können Sicherheitsmargen geringer angesetzt werden, was die Produktivität der überwachten Anlage erhöht. Besonders bevorzugt ist es, wenn der Detektor ein physisch an der Anlage installierter Detektor ist, da er in diesem Fall einen "echten" Messwert liefert. Alternativ hierzu kann der Detektor jedoch auch "virtuell" sein, indem der Startpunkt beispielsweise aus den Daten der Steuerung abgeleitet wird.

In einer weiteren Ausgestaltung ist ein mit der Auswerteeinheit verbundener Speicher vorhanden, der dazu ausgebildet ist, ein zeitliches Referenzprofil der zumindest einen Bewegungsgröße des bewegten Anlagenteils abzuspeichern.

Weiterhin ist es bevorzugt, wenn die Auswerteeinheit dazu ausgebildet ist, ein aktuelles Bewegungsprofil des bewegten Anlagenteils mit dem Referenzprofil zu vergleichen und in Abhängigkeit davon das bewegte Anlagenteil stillzusetzen.

Die Aufnahme und Überwachung eines Referenzprofils, beispielsweise also der zeitliche Verlauf der Beschleunigung oder Geschwindigkeit des bewegten Anlagenteils während eines Arbeitszyklus, ermöglicht eine sehr zuverlässige Überwachung der Anlage. Insbesondere ist es damit sehr einfach möglich, Veränderungen im Bewegungsablauf der Anlage, beispielsweise ein verlängerter Nachlaufweg, aufgrund von Alterungserscheinungen, Verschleiß oder externen Einflüssen schnell und zuverlässig zu erkennen und darauf zu reagieren. Darüber hinaus können auch schon aus der Aufnahme eines Bewegungsprofils Rückschlüsse auf den Zustand der Anlage gezogen werden, so dass beispielsweise eine Sicherheitsmarge auf eine individuelle Anlage abgestimmt werden kann. Dies ermöglicht es, eine Sicherheitseinrichtung so an eine überwachte Anlage anzupassen, dass Einbußen bei der Produktivität minimiert sind.

In einer weiteren Ausgestaltung ist das bewegte Anlagenteil ein stempelartig bewegtes Werkzeug. Weiterhin ist es bevorzugt, wenn als Bewegungsgröße zumindest eine der nachfolgenden Größen bestimmt wird: Bewegungsgeschwindigkeit des Werkzeugs, Nachlaufweg des Werkzeugs (das ist gewissermaßen der Bremsweg inklusive Reaktionszeit nach Auslösen eines Notstopps), Mutingpunkt einer berührungslos wirkenden Schutzeinrichtung, Umschaltpunkt zwischen Eilund Schleichgang des Werkzeugs sowie Bewegungsrichtung des Werkzeugs.

Wie bereits weiter oben erwähnt, ist die vorliegende Erfindung nicht auf Pressen und ähnliche Maschinen mit zwei gegenläufig zueinander bewegten Anlagenteilen beschränkt. Andererseits handelt es sich dabei um einen besonders bevorzugten Anwendungsfall, da sich die bei solchen Anlagen auftretenden Bewegungen besonders einfach und vorteilhaft mit Hilfe der neuen Sicherheitseinrichtung überwachen lassen. So sind insbesondere die Bewegungshübe als auch die Bewegungsgeschwindigkeiten und Bewegungsbahnen einer Presse oder eines ähnlichen Werkzeugs besonders geeignet, um die Bestimmung von Geschwindigkeit, Wegstrecke und/oder Position anhand der Beschleunigung zu ermöglichen. Darüber hinaus besteht bei solchen Anlagen ein besonders hohes Risiko und daher ein besonders hoher Bedarf nach einer Sicherheitseinrichtung der vorliegenden Art.

In einer weiteren Ausgestaltung beinhaltet die Sicherheitseinrichtung eine mit dem Werkzeug mitlaufende, berührungslos wirkende Schutzeinrichtung mit einem Sender und einem Empfänger,
wobei der zumindest eine Beschleunigungssensor im Bereich des Senders und/oder Empfängers angeordnet ist.

Eine solche Schutzeinrichtung ist für sich genommen bekannt, wie eingangs dargelegt ist. Sie beschränkt sich nicht auf Lichtschrankenanordnung mit einem Lichtsender und einem Lichtempfänger, und sie kann stattdessen oder ergänzend beispielsweise auch eine Kamera als Empfänger im Sinne der vorliegenden Erfindung beinhalten. Durch die Anordnung des zumindest eines Beschleunigungssensors im Bereich des Empfängers kann eine lotrechte Justage des Senders/ Empfängers sehr einfach und sogar im laufenden Überwachungsbetrieb anhand der gravitativen Vorspannungen und der Beschleunigungen überprüft werden. Außerdem ist der Montageaufwand der neuen Sicherheitseinrichtung noch weiter reduziert, da der Sender und Empfänger ohnehin an der Anlage montiert werden müssen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Figur 1    eine vereinfachte Darstellung eines bevorzugten Ausführungsbeispiels der neuen Erfindung,

Figur 2    eine vereinfachte Darstellung eines kapazitiven Beschleunigungssensors, wie er vorteilhaft in Ausführungsbeispielen der Erfindung eingesetzt werden kann,

Figur 3    eine schematische Darstellung eines Geschwindigkeitsprofils des bewegten Anlagenteils bei der Anlage aus Figur 1, und

Figur 4    ein vereinfachtes Flussdiagramm zur Erläuterung eines Ausführungsbeispiels des erfindungsgemäßen Verfahrens.

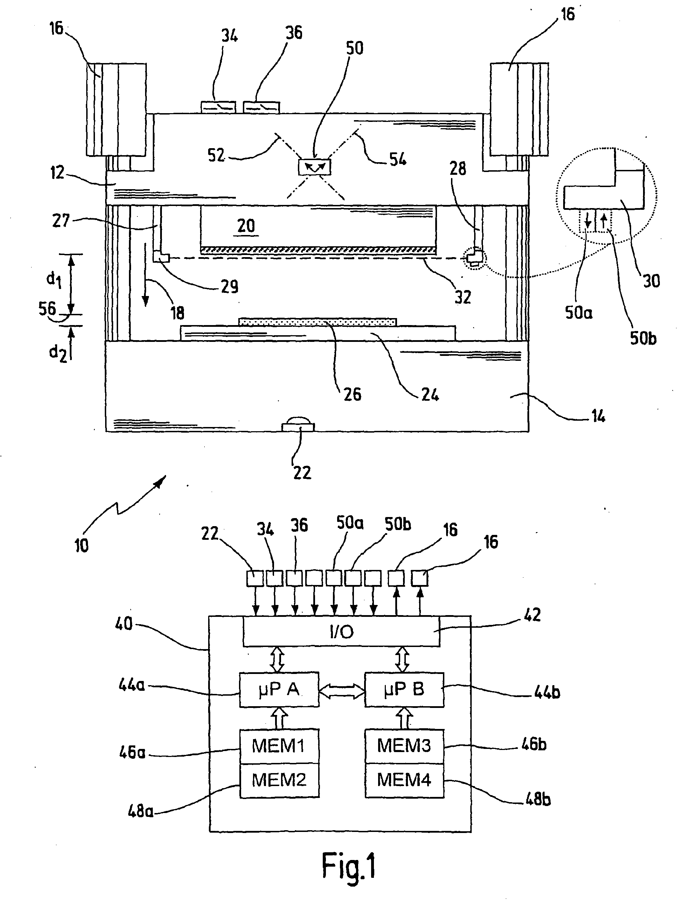

In Figur 1 ist eine Presse als ein bevorzugtes Ausführungsbeispiel der neuen Anlage in ihrer Gesamtheit mit der Bezugsziffer 10 bezeichnet.

Die Presse 10 besitzt ein Oberwerkzeug 12 (bewegtes Anlagenteil) und ein Unterwerkzeug 14. Bei den Bezugsziffern 16 sind zwei Antriebe vereinfacht dargestellt, mit denen das Oberwerkzeug 12 in Richtung eines Pfeils 18 gegen das Unterwerkzeug 14 verfahren werden kann. Am Oberwerkzeug 12 ist ein Biegewerkzeug 20 angeordnet. Bei der Bezugsziffer 22 ist ein Fußtaster vereinfacht dargestellt, der betätigt werden muss, um einen Arbeitszyklus der Presse 10 zu starten und durchzuführen. Alternativ hierzu kann die Presse 10 auch über andere Betätigungselemente bedient werden.

Auf dem Unterwerkzeug 14 ist eine Matrize 24 angeordnet, auf der ein Werkstück 26, beispielsweise ein Blechteil, liegt. Das untere Ende des Biegewerkzeugs 20 ist komplementär zu der Matrize 24 ausgebildet und ermöglicht beim Einfahren in die Matrize 24 eine spanlose Umformung des Werkstücks 26.

Mit den Bezugsziffern 27 und 28 sind zwei Halter bezeichnet, die links und rechts von dem Biegewerkzeug 20 an dem Oberwerkzeug 12 angeordnet sind. Am Ende des Halters 27 befindet sich ein Sender 29 und am Ende des Halters 28 befindet sich ein Empfänger 30. Sender 29 und Empfänger 30 bilden eine Lichtschrankenanordnung, die einen oder mehrere Lichtstrahlen 32 erzeugt, der bzw. die parallel zu der unteren Kante des Biegewerkzeugs 20 in einem geringen Abstand dazu verlaufen. Der oder die Lichtstrahlen 32 bewegen sich mit dem Biegewerkzeug 20 in Richtung des Pfeils 18 nach unten, das heißt Sender 29 und Empfänger 30 bilden eine mitlaufende berührungslose Schutzeinrichtung, wie sie vom Grundsatz her auch schon aus den eingangs genannten Druckschriften bekannt ist. Alternativ hierzu kann die berührungslos wirkende Schutzeinrichtung auch mit einer Kameraeinheit oder mit anderen optischen Mitteln realisiert sein.

Bei den Bezugsziffern 34 und 36 sind zwei Endschalter schematisch dargestellt, die nur dann geschlossen sind, wenn sich das Oberwerkzeug 12 in seinem oberen Totpunkt befindet. Die geschlossene Stellung der Endschalter 34, 36 signalisiert damit, dass sich die Presse 10 in ihrem Ausgangszustand zur Durchführung eines Arbeitszyklus befindet.

Bei der Bezugsziffer 40 ist eine Steuereinheit vereinfacht dargestellt, die zumindest einige der Funktionen der Presse 10 steuert. In einem bevorzugten Ausführungsbeispiel handelt es sich hier um eine fehlersichere SPS, wie sie von der vorliegenden Anmelderin unter der Bezeichnung PSS® angeboten wird. Die Steuereinheit 40 beinhaltet (vereinfacht dargestellt) einen Schnittstellenteil 42 sowie zwei oder mehr redundante Signalverarbeitungskanäle. Die Signalverarbeitungskanäle sind hier nur mit jeweils einem Prozessor 44a, 44b, einem ersten Speicher 46a, 46b und einem zweiten Speicher 48a, 48b dargestellt. Die Prozessoren 44a, 44b können über eine geeignete Schnittstelle (z.B. eine Busverbindung oder ein Dual-Ported-RAM) miteinander kommunizieren und somit eine Plausibilitätsprüfung der jeweiligen Verarbeitungsergebnisse durchführen. Der Schnittstellenteil 42 besitzt eine Vielzahl von Ein- und Ausgängen, an denen die Sensoren und Aktoren der Presse 10 angeschlossen sind. Insbesondere sind der Fußtaster 22, die Endschalter 34, 36 und zumindest der Empfänger 30 der Lichtschrankenanordnung angeschlossen. Des Weiteren können die Antriebe 16 der Presse (über geeignete Aktoren, wie etwa Schütze, hier nicht dargestellt) ausgeschaltet werden.

Bei der Bezugsziffer 50 ist schematisch ein Beschleunigungssensor dargestellt, der hier beispielhaft an dem Oberwerkzeug 12 der Presse 10 angeordnet ist.

Der Beschleunigungssensor 50 besitzt in diesem Ausführungsbeispiel zwei Sensorachsen 52, 54, das heißt er liefert Beschleunigungsmesswerte entlang der beiden senkrecht zueinander verlaufenden Achsen 52, 54. Im gezeigten Ausführungsbeispiel ist der Beschleunigungssensor 50 so angeordnet, dass jede Sensorachse 52, 54 mit einer Neigung von 45° zu der Bewegungsrichtung 18 des Oberwerkzeugs 12 verläuft. Durch eine vektorielle Auswertung der Beschleunigungsmesswerte entlang der beiden Sensorachsen 52, 54 kann eine redundante Information über die Beschleunigung des Oberwerkzeugs 12 entlang der Bewegungsrichtung 18 abgeleitet werden.

Alternativ oder ergänzend zu dem Beschleunigungssensor 50 besitzt die Presse 10 in einem anderen Ausführungsbeispiel zwei einzelne Beschleunigungssensoren 50a, 50b, die an dem Empfänger 30 (oder am Sender 29) oder zumindest in deren Bereich angeordnet sind. Bevorzugt sind die Beschleunigungssensoren 50a, 50b in einem Ausführungsbeispiel in dem Empfänger 30 integriert. Die Beschleunigungssensoren 50a, 50b sind im bevorzugten Ausführungsbeispiel in zwei unterschiedlichen Einbaulagen angeordnet, und zwar um 180° verdreht zueinander. Hierdurch liefern die Beschleunigungssensoren 50a, 50b unterschiedliche gravitative Vorspannungen und die Spannungssignale am Ausgang der Sensoren sind gegenläufig, was eine vorteilhafte Differenzwertbildung ermöglicht.

Es versteht sich, dass der Beschleunigungssensor 50 alternativ zu der vereinfachten Darstellung ebenfalls in dem Sender 29 oder Empfänger 30 integriert sein kann. Darüber hinaus könnten die beiden einzelnen Beschleunigungssensoren 50a, 50b abweichend von der gezeigten Anordnung im bzw. am Empfänger auch an einer anderen Stelle des Oberwerkzeugs 12 oder an einer anderen Stelle angeordnet sein, an der sich die Beschleunigungen des Oberwerkzeugs bzw. des Biegewerkzeugs 20 messen lassen. Ggf. können auch noch weitere Beschleunigungssensoren eingesetzt werden, um entweder die Redundanz zu erhöhen und/oder weitere Bewegungsgrößen zu bestimmen.

Die Ausgangssignale des oder der Beschleunigungssensoren 50, 50a, 50b sind ebenfalls der Steuereinheit 40 zugeführt, wie dies anhand der Bezugsziffern 52, 54 bei der Steuereinheit 40 angedeutet ist.

Im vorliegenden Ausführungsbeispiel erfolgt die Bestimmung einer Bewegungsgeschwindigkeit des Oberwerkzeugs 12 sowie die Bestimmung von Nachlaufweg ("Bremsweg"), Umschaltpunkt zwischen Eilgang und Schleichgang sowie Mutingpunkt für die Lichtschrankenanordnung in der Steuereinheit 40. Hierzu ist in den Speichern 46a, 46b ein entsprechendes Programmmodul hinterlegt. Mit anderen Worten bilden die Programmmodule in den Speichern 46a, 46b jeweils eine Auswerteeinheit im Sinne der vorliegenden Erfindung. Alternativ hierzu könnte die Auswerteeinheit jedoch auch getrennt von der Steuereinheit 40 realisiert sein. In einem bevorzugten Ausführungsbeispiel ist die Auswerteeinheit im Sinne der vorliegenden Erfindung vollständig in dem Empfänger 30 der Lichtschrankenanordnung integriert. Bevorzugt sind dann auch alle anderen sicherheitsrelevanten Aufgaben dort angesiedelt, so dass die Steuereinheit 40 eine konventionellen, nicht-sichere Steuereinheit sein kann.

Um einen Arbeitszyklus der Presse 10 zu starten, muss sich das Oberwerkzeug 12 in seinem oberen Totpunkt (wie in Figur 1 dargestellt) befinden. Diese Ausgangsposition lässt sich anhand der Endschalter 34, 36 fehlersicher detektieren.

Bei Betätigung des Fußtasters 22 bewegt sich das Oberwerkzeug 12 mit dem Biegewerkzeug 20 nach unten, und zwar typischerweise zunächst mit einer hohen Bewegungsgeschwindigkeit (Eilgang). Die hohe Bewegungsgeschwindigkeit wird beibehalten, bis das Biegewerkzeug 20 einen definierten Umschaltpunkt 56 erreicht. Die im Eilgang zurückgelegte Wegstrecke ist in Figur 1 mit $d_1$ bezeichnet. Ab dem Umschaltpunkt bewegt sich das Oberwerkzeug 12 mit dem Biegewerkzeug 20 nur im Schleichgang, um den Umformprozess zu vollenden. Die zurückgelegte Wegstrecke ist in Figur 1 bei $d_2$ angegeben.

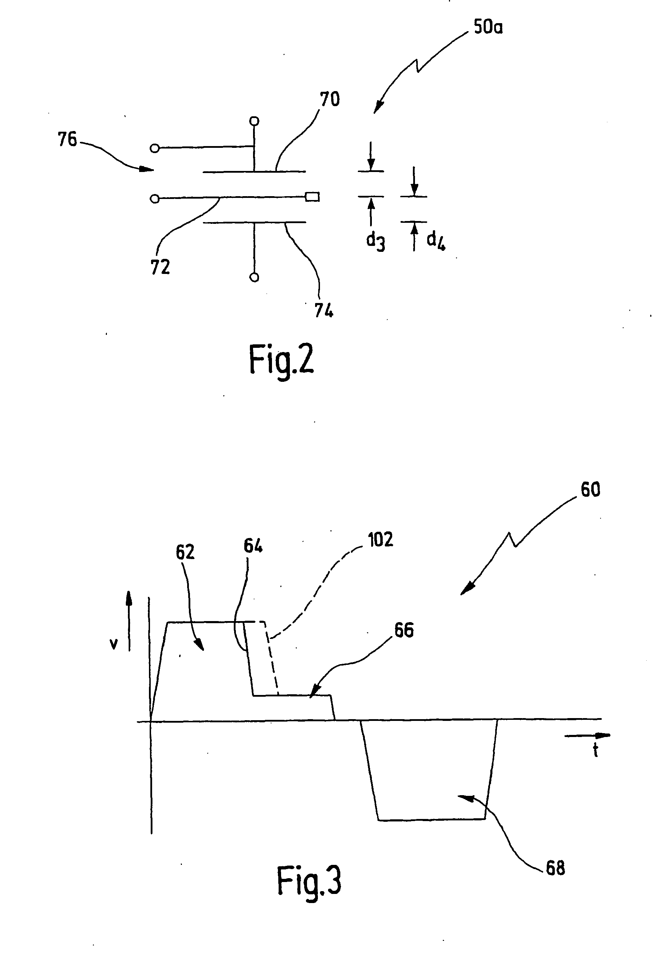

Anschließend kehrt das Oberwerkzeug 12 wieder in seine Ausgangsposition (oberer Totpunkt) zurück. Dies erfolgt in aller Regel wiederum mit einer hohen Geschwindigkeit, jedoch einer entgegengesetzten Bewegungsrichtung. Ein entsprechendes Geschwindigkeitsprofil ist in Figur 3 vereinfacht dargestellt, wobei der Verlauf der Geschwindigkeit über der Zeit gezeigt ist. Während einer ersten Phase 62 nimmt das Oberwerkzeug 12 seine maximale Geschwindigkeit auf (Eilgang) und wird anschließend bei Erreichen des Umschaltzeitpunkts 56 wieder abgebremst (Flanke 64). Anschließend wird die Bewegung mit geringerer Geschwindigkeit fortgesetzt (Schleichgang, Phase 66). Bei manchen Pressen muss die Bewegung im Schleichgang der Phase 66 durch ein erneutes Betätigen eines Bedienschalters gezielt initiiert werden. Nach der Umformung des Werkstücks erfolgt die Rückkehr des Oberwerkzeugs mit hoher Geschwindigkeit, jedoch entgegengesetzter Bewegungsrichtung (Phase 68).

Figur 2 zeigt schematisch den Aufbau eines kapazitiven Beschleunigungssensors 50a, wie er in dem Ausführungsbeispiel gemäß Figur 1 zum Einsatz kommen kann. Der Beschleunigungssensor 50a besitzt ein Messelement, das vereinfacht als ein "doppelter Plattenkondensator" mit drei zueinander parallelen Platten 70, 72, 74 betrachtet werden kann. Die mittlere Platte 72 ist beweglich gelagert. Im Ruhezustand ist der Abstand der Platten 70, 72 in etwa gleich wie der Abstand der Platten 72, 74. Wird der Beschleunigungssensor 50a beschleunigt, verändern sich die Abstände $d_3$ und $d_4$ aufgrund der Masseträgheit der mittleren Platte 72. Die veränderten Abstände haben eine Veränderung der Kapazitätswerte $C_1$ und $C_2$ der beiden Kondensatoren zur Folge, die messtechnisch erfasst werden können.

Des weiteren besitzt der Beschleunigungssensor 50a hier eine Testeingang 76, an dem ein Testsignal angelegt werden kann. Mit Hilfe des Testsignals kann die mittlere Platte 72 gezielt ausgelenkt werden, was sich am Ausgang des Beschleunigungssensors als ein entsprechendes "Beschleunigungssignal" bemerkbar machen muss. Damit lässt sich der Beschleunigungssensor auf fehlerfreie Funktion überprüfen.

Es sei allerdings darauf hingewiesen, dass die vorliegende Erfindung nicht auf kapazitive Beschleunigungssensoren beschränkt ist. Beispielsweise können stattdessen auch piezoresistive Beschleunigungssensoren verwendet werden, bei denen die Auslenkung eines Masseelements mit Hilfe von Piezoelementen bestimmt werden. Darüber hinaus können grundsätzlich auch andere Messprinzipien zum (vorzugsweise direkten) messtechnischen Erfassen von Beschleunigungen verwendet werden.

Aus den erfassten Beschleunigungen lässt sich die Geschwindigkeit des Oberwerkzeugs bestimmen, indem man die Beschleunigungswerte über der Zeit integriert. Mathematisch ist der Zusammenhang

$$v_{A/B}(t) = v_0 + \int_{t_1}^{t_2} a_{A/B}\, dt \, ,$$

wobei

$V_{A/B}(t)$  der Verlauf der Geschwindigkeit über der Zeit ist, der in den beiden Auswertekanälen A bzw. B bestimmt wird,

$v_0$  die Geschwindigkeit zu Beginn der Integration ist,

$\alpha_{A/B}$  die in den Kanälen A bzw. B messtechnisch erfassten Beschleunigungswerte sind, und

$t_1, t_2$  der Anfangs- bzw. Endzeitpunkt des Zeitintervalls ist, über das die Beschleunigungswerte $\alpha_{A/B}$ integriert werden.

In gleicher Weise lässt sich die zurückgelegte Wegstrecke aus der erhaltenen Geschwindigkeit gemäß folgendem Zusammenhang bestimmen:

$$s_{A/B}(t) = s_0 + \int_{t_1}^{t_2} v_{A/B}\, dt \, ,$$

wobei

$s_{A/B}(t)$  die zum Zeitpunkt t zurückgelegte Wegstrecke ist,

$S_0$  der Ort zu Beginn der Integration ist,

$V_{A/B}$  die Geschwindigkeit ist, mit der die Wegstrecke s zurückgelegt wurde, und zwar getrennt nach den Kanälen A und B, und

$t_1, t_2$  die Anfangs- und Endzeitpunkte des betrachteten Zeitintervalls sind.

Da sich das Oberwerkzeug 12 zu Beginn jedes Arbeitszyklus im Ruhezustand in seinem oberen Totpunkt befindet, ist die Geschwindigkeit zu Beginn jedes Arbeitszyklus Null. Ebenso ist die zurückgelegte Wegstrecke bezogen auf den oberen Totpunkt zu Beginn jedes Arbeitszyklus Null. Eine kontinuierliche oder quasikontinuierliche Erfassung der Beschleunigungswerte ermöglicht daher eine fortlaufende Bestimmung der Geschwindigkeit und der zurückgelegten Wegstrecke. Anhand der zurückgelegten Wegstrecke kann auch die jeweils aktuelle Position des Oberwerkzeugs 12 bestimmt werden. Auf diese Weise lässt sich ferner bestimmen, ob das Oberwerkzeug den Umschaltpunkt zum Umschalten zwischen Eilgang und Schleichgang erreicht hat. Des Weiteren ist eine Nachlaufmessung möglich, wenn man als Startzeitpunkt $t_1$ das Auslösen des Notstopps heranzieht und als Endzeitpunkt $t_2$ den vollständigen Stillstand des Oberwerkzeugs 12.

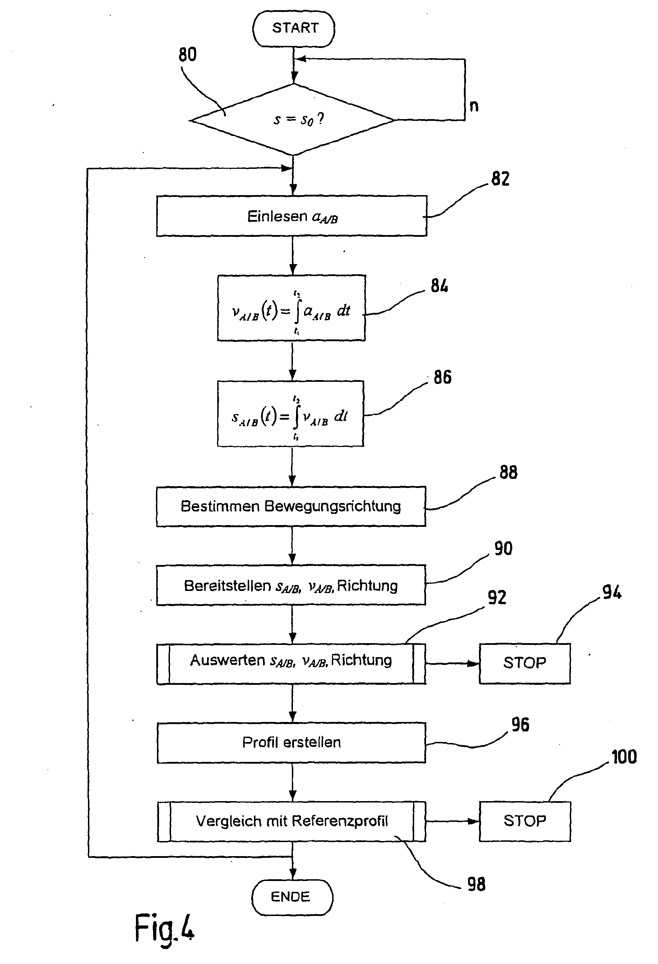

Ein bevorzugtes Ausführungsbeispiel des erfindungsgemäßen Verfahrens ist vereinfacht in Figur 4 dargestellt. Im Schritt 80 wird zunächst überprüft, ob sich das Oberwerkzeug 12 in seinem oberen Totpunkt (hier als $s_0$ bezeichnet) befindet. Nur wenn diese Bedingung erfüllt ist, gelangt das Verfahren zum Schritt 82, in dem die Beschleunigungswerte $a_A$ und $a_B$ redundant eingelesen werden. Gemäß Schritt 84 und 86 erfolgt dann die Bestimmung der Bewegungsgeschwindigkeit und der zurückgelegten Wegstrecke durch Integration. Ferner wird in Schritt 88 die Bewegungsrichtung bestimmt, wobei dieser Schritt optional ist und ggf. auch entfallen kann. Gemäß Schritt 90 werden die erhaltenen Informationen anschließend bereitgestellt, um gemäß Schritt 92 eine Auswertung zu ermöglichen.

Die Auswertung der erhaltenen Geschwindigkeits- und/oder Positions- und Richtungswerte erfolgt in an sich bekannter Weise. Insbesondere wird überprüft, ob die jeweilige Geschwindigkeit des Oberwerkzeugs unterhalb der für einen sicheren Betrieb festgelegten Maximalgeschwindigkeiten liegt. Des Weiteren wird überprüft, ob sich das Oberwerkzeug jeweils in einer Position befindet (eine Wegstrecke zurückgelegt hat), die einem ordnungsgemäßen Arbeitszyklus entspricht. Ist dies nicht der Fall, erfolgt gemäß Schritt 94 ein Notstopp, da sich die Presse 10 dann in einem unsicheren Zustand befindet. Dabei ist es möglich, den Notstopp nicht unmittelbar aufgrund der erhaltenen Geschwindigkeits- und/oder Positionswerte auszulösen, sondern beispielsweise lediglich das Deaktivieren (Muten) der Lichtschrankenanordnung zu unterbinden, so dass der Notstopp ausgelöst wird, wenn der Lichtstrahl 32 durch das Werkstück 26 unterbrochen wird.

In dem bevorzugten Ausführungsbeispiel wird anhand der bestimmten Geschwindigkeits- und/oder Positionswerte ein Bewegungsprofil erstellt, wie dies vereinfacht in Figur 3 dargestellt ist. Im Schritt 98 erfolgt ein Vergleich des aufgenommenen Bewegungsprofils mit einem Referenzprofil. Beispielsweise lässt sich damit feststellen, wenn sich das Oberwerkzeug länger als vorgesehen mit seiner hohen Geschwindigkeit bewegt, was in Figur 4 bei der Bezugsziffer 102 vereinfacht angedeutet ist. Auch in einem solchen Fall erfolgt eine Abschaltung der Presse gemäß Schritt 100, um eine für den Bediener gefährliche Situation zu vermeiden.

**Patentansprüche**

1. Automatisiert arbeitende Anlage, insbesondere Fertigungs-und/oder Förderanlage, mit zumindest einem automatisiert bewegten Anlagenteil (12, 20), mit einer Steuereinheit (40), die dazu ausgebildet ist, die Bewegungen des Anlagenteils (12) zu steuern, und mit einer Sicherheitseinrichtung, die dazu ausgebildet ist, zumindest eine Bewegungsgröße (86, 88) des Anlagenteils (12, 20) sicherheitsrelevant zu bestimmen, **dadurch gekennzeichnet, dass** die Sicherheitseinrichtung zumindest einen Beschleunigungssensor (50; 50a, 50b) und eine Auswerteeinheit (46a, 46b) beinhaltet, wobei der Beschleunigungssensor (50; 50a, 50b) mit dem bewegten Anlagenteil (12, 20) gekoppelt ist, um eine Beschleunigung des bewegten Anlagenteils (12, 20) zu erfassen, und wobei die Auswerteeinheit (46a, 46b) dazu ausgebildet ist, zumindest eine Bewegungsgeschwindigkeit (86) und/oder Bewegungswegstrecke (88) des Anlagenteils (12, 20) anhand der Beschleunigung zu bestimmen.

2. Anlage nach Anspruch 1, **dadurch gekennzeichnet, dass** die Sicherheitseinrichtung zumindest zwei Beschleunigungssensoren (50; 50a, 50b) aufweist und dass die Auswerteeinheit (46a, 46b) dazu ausgebildet ist, die Bewegungsgeschwindigkeit und/oder Bewegungswegstrecke des Anlagenteils (12, 20) mit Hilfe der zumindest zwei Beschleunigungssensoren (50a, 50b) redundant zu bestimmen.

3. Anlage nach Anspruch 2, **dadurch gekennzeichnet, dass** die zumindest zwei Beschleunigungssensoren (50; 50a, 50b) so ausgebildet sind, dass sie Beschleunigungen des bewegten Anlagenteils in jeweils einer von zumindest zwei unterschiedlichen Sensorachsen (52, 54) erfassen.

4. Anlage nach Anspruch 2 oder 3, **dadurch gekennzeichnet, dass** die zumindest zwei Beschleunigungssensoren (50) in einem gemeinsamen Sensorgehäuse integriert sind.

5. Anlage nach einem der Ansprüche 2 bis 4, **dadurch gekennzeichnet, dass** die zumindest zwei Beschleunigungssensoren (50a, 50b) in zumindest zwei unterschiedlichen Einbaulagen mit dem beweglichen Anlagenteil (12, 20) gekoppelt sind, so dass an den zumindest zwei Beschleunigungssensoren (50a, 50b) unterschiedliche gravitative Vorspannungen auftreten.

6. Anlage nach Anspruch 5, **dadurch gekennzeichnet, dass** die zumindest zwei Beschleunigungssensoren (50a, 50b) hinsichtlich ihrer Einbaulagen um 180° versetzt zueinander angeordnet sind.

7. Anlage nach einem der Ansprüche 2 bis 6, **dadurch gekennzeichnet, dass** die Auswerteeinheit (46a, 46b) dazu ausgebildet ist, die zumindest zwei Beschleunigungssensoren (50a, 50b) zeitversetzt zueinander auszulesen.

8. Anlage nach einem der Ansprüche 1 bis 7, **dadurch gekennzeichnet, dass** der zumindest eine Beschleunigungssensor einen Testeingang zum Einspeisen eines Testsignals besitzt.

9. Anlage nach einem der Ansprüche 1 bis 8, **dadurch gekennzeichnet, dass** die Auswerteeinheit (46a, 46b) ferner dazu ausgebildet ist, eine Bewegungsrichtung (18) des bewegten Anlagenteils (12, 20) anhand der Beschleunigung sicherheitsrelevant zu bestimmen.

10. Anlage nach einem der Ansprüche 1 bis 9, **gekennzeichnet durch** einen Detektor (34, 36), der dazu ausgebildet ist, das Erreichen einer definierten Ruheposition des bewegten Anlagenteils (12, 20) zu erfassen, wobei der Detektor mit der Auswerteeinheit (46a, 46b) verbunden ist.

11. Anlage nach einem der Ansprüche 1 bis 10, **gekennzeichnet durch** einen mit der Auswerteeinheit (46a, 46b) verbundenen Speicher (48a, 48b), der dazu ausgebildet ist, ein zeitliches Referenzprofil (60) der zumindest einen Bewegungsgröße des bewegten Anlagenteils (12, 20) abzuspeichern.

12. Anlage nach Anspruch 11, **dadurch gekennzeichnet, dass** die Auswerteeinheit (46a, 46b) dazu ausgebildet ist, ein aktuelles Bewegungsprofil (102) des bewegten Anlagenteils (12, 20) mit dem Referenzprofil (60) zu vergleichen und in Abhängigkeit davon das bewegte Anlagenteil (12) stillzusetzen.

13. Anlage nach einem der Ansprüche 1 bis 12, **dadurch gekennzeichnet, dass** das bewegte Anlagenteil (12, 20) ein stempelartig bewegtes Werkzeug (20) ist.

14. Anlage nach Anspruch 13, ferner **gekennzeichnet durch** eine mit dem Werkzeug (20) mitlaufende, berührungslos wirkende Schutzeinrichtung mit einem Sender und einem Empfänger (30), wobei der zumindest eine Beschleunigungssensor (50a, 50b) im Bereich des Senders und/oder Empfängers (30) angeordnet ist.

15. Verfahren zum sicherheitsrelevanten Stillsetzen eines bewegten Anlagenteils (12, 20) einer automatisiert arbeitenden Anlage (10), insbesondere einer Fertigungs-und/oder Förderanlage, mit den Schritten:

- sicherheitsrelevantes Bestimmen (86, 88) einer Bewegungsgröße des bewegten Anlagenteils (12, 20),
- sicherheitsrelevantes Vergleichen (92) der bestimmten Bewegungsgröße mit einem definierten Referenzwert, und
- Stillsetzen (94, 100) des Anlagenteils, wenn die bestimmte Bewegungsgröße den definierten Referenzwert übersteigt,

**dadurch gekennzeichnet, dass** zum Bestimmen der Bewegungsgröße zunächst eine Beschleunigung des bewegten Anlagenteils (12, 20) mit Hilfe eines Beschleunigungssensors (50; 50a, 50b) erfasst wird (82), und dass anschließend anhand der erfassten Beschleunigung zumindest eine Bewegqungsqeschwindigkeit und/oder Bewegungswegstrecke des Anlagenteils als Bewegungsgröße (86, 88) bestimmt wird

16. Verfahren nach Anspruch 15, **dadurch gekennzeichnet, dass** das bewegte Anlagenteil (12, 20) ein stempelartig bewegtes Werkzeug (20) ist und dass zumindest eine der nachfolgenden Größen als Bewegungsgröße bestimmt wird: Bewegungsgeschwindigkeit des Werkzeugs, Nachlaufweg des Werkzeugs, Mutingpunkt einer berührungslos wirkenden Schutzeinrichtung, Umschaltpunkt zwischen Eil- und Schleichgang des Werkzeugs, Bewegungsrichtung des Werkzeugs.

**Claims**

1. An automatically operating installation, such as a manufacturing and/or conveyor installation, comprising at least one installation part (12, 20) which is moved in an automated form, comprising a control unit (40) designed to control the movements of the installation part (12), and comprising a safety device designed to determine at least one movement variable (86, 88) of the installation part (12, 20) in a safety-related manner, **characterized in that** the safety device comprises at least one acceleration sensor (50; 50a, 50b) and an evaluation unit (46a, 46b), with the acceleration sensor (50; 50a, 50b) being coupled to the moving installation part (12, 20) in order to detect any acceleration of the moving installation part (12, 20), and with the evaluation unit (46a, 46b) being designed to determine at least a movement velocity (86) and/or a movement travel (88) of the installation part (12, 20) on the basis of the acceleration.

2. The installation of claim 1, **characterized in that** the safety device comprises at least two acceleration sensors (50; 50a, 50b), and the evaluation unit (46a, 46b) is designed to determine the movement velocity and/or the movement travel of the installation part (12, 20) in a redundant form, by means of the at least two acceleration sensors (50a, 50b).

3. The installation of claim 2, **characterized in that** the at least two acceleration sensors (50; 50a, 50b) are designed such that they detect accelerations of the moving installation part in each case on one of at least two different sensor axes (52, 54).

4. The installation of claim 2 or 3, **characterized in that** the at least two acceleration sensors (50) are integrated in a common sensor housing.

5. The installation of one of claims 2 to 4, **characterized in that** the at least two acceleration sensors (50a, 50b) are coupled to the moving installation part (12, 20) in at least two different mounting positions, such that different gravitational biases occur at the at least two acceleration sensors (50a, 50b).

6. The installation of claim 5, **characterized in that** the mounting positions of the at least two acceleration sensors (50a, 50b) are arranged offset through 180° with respect to one another.

7. The installation of one of claims 2 to 6, **characterized in that** the evaluation unit (46a, 46b) is designed to read the at least two acceleration sensors (50a, 50b) with a time offset between them.

8. The installation of one of claims 1 to 7, **characterized in that** the at least one acceleration sensor has a test input for feeding in a test signal.

9. The installation of one of claims 1 to 8, **characterized in that** the evaluation unit (46a, 46b) is further designed to determine a movement direction (18) of the moving installation part (12, 20) on the basis of the acceleration, in a safety-related manner.

10. The installation of one of claims 1 to 9, **characterized by** a detector (34, 36) designed to detect when the moving installation part (12, 20) has reached a defined rest position, with the detector being connected to the evaluation unit (46a, 46b).

**11.** The installation of one of claims 1 to 10, **characterized by** a memory (48a, 48b) which is connected to the evaluation unit (46a, 46b) and which is designed to store a time reference profile (60) of the at least one movement variable of the moving installation part (12, 20).

**12.** The installation of claim 11, **characterized in that** the evaluation unit (46a, 46b) is designed to compare an instantaneous movement profile (102) of the moving installation part (12, 20) with the reference profile (60), and to stop the moving installation part (12) as a function of this.

**13.** The installation of one of claims 1 to 12, **characterized in that** the moving installation part (12, 20) is a tool (20) which moves like a stamp.

**14.** The installation of claim 13, **characterized by** a non-contact protective device moving with the tool (20) and comprising a transmitter and a receiver (30), with the at least one acceleration sensor (50a, 50b) being arranged in the area of the transmitter and/or receiver (30).

**15.** A method for safety-related stopping of a moving installation part (12, 20) of an automatically operating installation (10), such as a manufacturing and/or conveyor installation, comprising the following steps:

- safety-related determination (86, 88) of a movement variable of the moving installation part (12, 20),
- safety-related comparison (92) of the determined movement variable with a defined reference value, and
- stopping (94, 100) the installation part when the determined movement variable exceeds the defined reference value,

**characterized in that**, in order to determine the movement variable, an acceleration of the moving installation part (12, 20) is first detected by means of an acceleration sensor (50; 50a, 50b), and at least one movement velocity and/or movement travel of the installation part is then determined as the movement variable (86, 88) on the basis of the detected acceleration.

**16.** The method of claim 15, **characterized in that** the moving installation part (12, 20) is a tool (20) moving like a stamp, and at least one of the following variables is determined as the movement variable: movement velocity of the tool, slowing-down travel of the tool, muting point of a non-contact protective device, switching time between the high speed and creeping speed of the tool, movement direction of the tool.

**Revendications**

**1.** Installation automatisée, en particulier installation de fabrication et/ou de transport, avec au moins une partie d'installation (12, 20) à mouvement automatisé, avec une unité de commande (40), qui est conçue pour commander les mouvements de la partie d'installation (12), et avec un dispositif de sécurité qui est conçu pour déterminer au moins une grandeur de mouvement (86, 88) de la partie d'installation (12, 20) utile pour la sécurité, **caractérisée en ce que** le dispositif de sécurité contient au moins un capteur d'accélération (50 ; 50a, 50b) et une unité d'analyse (46a, 46b), le capteur d'accélération (50 ; 50a, 50b) étant couplé à la partie d'installation (12, 20) mobile afin de détecter une accélération de la partie d'installation (12, 20) mobile, et l'unité d'analyse (46a, 46b) étant conçue pour déterminer à l'appui de l'accélération au moins une vitesse de déplacement (86) et/ou une trajectoire de déplacement (88) de la partie d'installation (12, 20).

**2.** Installation selon la revendication 1, **caractérisée en ce que** le dispositif de sécurité comporte au moins deux capteurs d'accélération (50 ; 50a, 50b) et **en ce que** l'unité d'analyse (46a, 46b) est conçue pour déterminer de manière redondante la vitesse de déplacement et/ou la trajectoire de déplacement de la partie d'installation (12, 20) au moyen desdits au moins deux capteurs d'accélération (50 ; 50a, 50b).

**3.** Installation selon la revendication 2, **caractérisée en ce que** lesdits au moins deux capteurs d'accélération (50 ; 50a, 50b) sont réalisés de telle sorte qu'ils détectent des accélérations de la partie d'installation mobile dans respectivement un axe de capteur parmi au moins deux axes de capteur différents (52, 54).

**4.** Installation selon la revendication 2 ou 3, **caractérisée en ce que** lesdits au moins deux capteurs d'accélération (50) sont intégrés dans un boîtier commun.

**5.** Installation selon l'une quelconque des revendications 2 à 4, **caractérisée en ce que** lesdits au moins deux capteurs d'accélération (50a, 50b) sont couplés, dans au moins deux positions de montage différentes, avec la partie d'installation (12, 20) mobile, de telle sorte que des précontraintes gravitationnelles différentes sont générées sur lesdits au moins deux capteurs d'accélération (50a, 50b).

**6.** Installation selon la revendication 5, **caractérisée en ce que** lesdits au moins deux capteurs d'accélération (50a, 50b) sont disposés l'un par rapport à l'autre en étant décalés de 180° par rapport à leur position de montage.

7. Installation selon l'une quelconque des revendications 2 à 6, **caractérisée en ce que** l'unité d'analyse (46a, 46b) est réalisée pour lire de manière décalée dans le temps lesdits au moins deux capteurs d'accélération (50a, 50b).

8. Installation selon l'une quelconque des revendications 1 à 7, **caractérisée en ce que** ledit au moins un capteur d'accélération comporte une entrée de test pour recevoir un signal de test.

9. Installation selon l'une quelconque des revendications 1 à 8, **caractérisée en ce que** l'unité d'analyse (46a, 46b) est réalisée en outre pour déterminer, de manière utile pour la sécurité, une direction de déplacement (18) de la partie d'installation (12, 20) à l'appui de l'accélération.

10. Installation selon l'une quelconque des revendications 1 à 9, **caractérisée par** un détecteur (34, 36) qui est réalisé pour détecter si la partie d'installation (12, 20) mobile a atteint une position de repos définie, le détecteur étant relié à l'unité d'analyse (46a, 46b).

11. Installation selon l'une quelconque des revendications 1 à 10, **caractérisée par** une mémoire (48a, 48b) qui est reliée à l'unité d'analyse (46a, 46b) et qui est conçue pour mémoriser un profil de référence (60), en fonction du temps, de ladite au moins une grandeur de mouvement de la partie d'installation (12, 20) mobile.

12. Installation selon la revendication 11, **caractérisée en ce que** l'unité d'analyse (46a, 46b) est conçue pour comparer un profil de mouvement (102) actuel de la partie d'installation (12, 20) avec le profil de référence (60) et, en fonction de cette comparaison, d'immobiliser la partie d'installation (12) mobile.

13. Installation selon l'une quelconque des revendications 1 à 12, **caractérisée en ce que** la partie d'installation (12, 20) mobile est un outil (20) mobile du type poinçon.

14. Installation selon la revendication 13, **caractérisée par** un dispositif de protection, entraîné en mouvement avec l'outil (20), agissant sans contact et muni d'un émetteur et d'un récepteur (30), ledit au moins un capteur d'accélération (50a, 50b) étant disposé dans la zone de l'émetteur et/ou du récepteur (30).

15. Procédé pour immobiliser de manière utile pour la sécurité une partie (12, 20) mobile d'une installation (10) automatisée, en particulier une installation de fabrication et/ou de transport, comportant les étapes :

- détermination (86, 88) de manière utile pour la sécurité d'une grandeur de mouvement de la partie d'installation (12, 20) mobile,
- comparaison (92) de manière utile pour la sécurité de la grandeur de mouvement déterminée avec une valeur de référence définie, et
- immobilisation (94, 100) de la partie d'installation lorsque la grandeur de mouvement déterminée est supérieure à la valeur de référence définie,

**caractérisé en ce que** pour déterminer la grandeur de mouvement, un capteur d'accélération (50 ; 50a, 50b) est destiné à détecter (82) d'abord une accélération de la partie d'installation (12, 20) mobile, et **en ce que**, ensuite, à l'appui de l'accélération détectée est déterminée au moins une vitesse de déplacement et/ou une trajectoire de déplacement de la partie d'installation en tant que grandeur de mouvement (86, 88).

16. Procédé selon la revendication 15, **caractérisé en ce que** la partie d'installation (12, 20) mobile est un outil (20) mobile du type poinçon et **en ce qu'**au moins une des grandeurs suivantes est déterminée en tant que grandeur de mouvement : vitesse de déplacement de l'outil, trajet d'inertie de l'outil, point de mise au repos d'un dispositif de protection agissant sans contact, point d'inversion entre un mouvement rapide et un mouvement lent de l'outil, direction de déplacement de l'outil.

Fig.1

Fig.2

Fig.3

START

80

$s = s_0$ ?

n

82

Einlesen $a_{A/B}$

84

$$v_{A/B}(t) = \int_{t_1}^{t_2} a_{A/B}\, dt$$

86

$$s_{A/B}(t) = \int_{t_1}^{t_2} v_{A/B}\, dt$$

88

Bestimmen Bewegungsrichtung

90

Bereitstellen $s_{A/B}$, $v_{A/B}$, Richtung

92

94

Auswerten $s_{A/B}$, $v_{A/B}$, Richtung

STOP

96

Profil erstellen

100

98

Vergleich mit Referenzprofil

STOP

ENDE

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027156 A1
- WO 9725568 A